**Europäisches Patentamt**

**European Patent Office**

**Office européen des brevets**

(19)

(11) **EP 0 842 767 B1**

(12) ## FASCICULE DE BREVET EUROPEEN

(45) Date de publication et mention
de la délivrance du brevet:
**28.01.2004 Bulletin 2004/05**

(51) Int Cl.⁷: **B32B 17/10**, E06B 3/66,
B60J 1/00, C03C 27/12

(21) Numéro de dépôt: **97402646.0**

(22) Date de dépôt: **06.11.1997**

(54) **Vitrage multiple à propriétés d'isolation acoustique et thermique**

Schall- und wärmedämmende Mehrfachverglasung

Thermally and acoustically insulating multiple glazing unit

(84) Etats contractants désignés:
**AT BE CH DE DK ES FI FR GB IT LI LU NL PT SE**

(30) Priorité: **14.11.1996 FR 9613858**

(43) Date de publication de la demande:
**20.05.1998 Bulletin 1998/21**

(73) Titulaire: **SAINT-GOBAIN GLASS FRANCE
92400 Courbevoie (FR)**

(72) Inventeur: **Rehfeld, Marc
95460 Ezanville (FR)**

(74) Mandataire: **Muller, René et al
SAINT-GOBAIN RECHERCHE,
39, quai Lucien Lefranc-BP 135
93303 Aubervilliers Cédex (FR)**

(56) Documents cités:
**EP-A- 0 100 701          EP-A- 0 387 148
GB-A- 2 144 792**

EP 0 842 767 B1

**Description**

La présente invention concerne un vitrage multiple monté dans une fenêtre à propriétés d'isolation thermique et acoustique comportant un panneau de verre feuilleté. De tels vitrages sont en général destinés à équiper des véhicules ou des bâtiments de manière à diminuer à l'intérieur, la perception des bruits extérieurs.

Depuis plusieurs années, dans de nombreux pays, l'utilisation de vitrages isolants thermiques s'est généralisée. Le plus souvent, ils sont constitués de deux verres de même épaisseur, généralement comprise entre 2,5 et 4 mm, séparés par une lame d'air sec de 6 à 12 mm et collés à leur périphérie à l'aide de mastics variés et éventuellement de profilés métalliques. Pendant la période de chauffage, de tels vitrages améliorent le confort des locaux d'habitation, de travail et de loisir et diminuent sensiblement les déperditions thermiques.

En outre dans certaines zones bruyantes, on désire également bénéficier d'une isolation acoustique renforcée. C'est pourquoi il a été proposé des techniques diverses pour améliorer les performances d'isolation acoustique des vitrages isolants thermiques ou des fenêtres dans lesquelles ils sont destinés à être posés. Il a déjà été proposé dans la technique de très nombreux types de vitrages, simples, feuilletés et multiples, en vue de répondre à certaines exigences d'isolation thermique ou d'insonorisation.

C'est ainsi que dans le brevet européen EP-B-0 100 701, la société SAINT-GOBAIN VITRAGE a proposé un vitrage multiple comprenant une première plaque de verre feuilleté et une seconde plaque de verre simple parallèle à la première plaque et séparée de celle-ci par une lame de gaz, les deux plaques étant assemblées entre elles de façon étanche aux gaz par des moyens connus dans la technique. Ce vitrage multiple est tel que la première plaque de verre feuilleté comprend deux feuilles de verre simple d'épaisseur respective comprise entre 3 et 8 mm, réunies par une couche de résine d'épaisseur au plus égale à 10 mm, que la lame de gaz a une épaisseur comprise entre 6 et 30 mm et que la seconde plaque a une épaisseur supérieure à 8 mm. La résine du verre feuilleté de la première plaque est choisie telle qu'un barreau de 9 cm de longueur et de 3 cm de largeur, constitué d'un verre feuilleté comprenant deux feuilles de verre de 4 mm, d'épaisseur réunies par une couche de 2 mm de cette résine, ait une fréquence critique qui diffère au plus de 35 % de celle d'un barreau de verre ayant la même longueur, la même largeur et 4 mm d'épaisseur. Ce vitrage permet d'apporter une bonne protection acoustique à un bâtiment contre les bruits routiers.

Dans un autre domaine de protection acoustique, celui où il s'agit de protéger un véhicule par rapport aux bruits aérodynamiques, le brevet européen EP-B-0 387 148 propose d'utiliser un vitrage feuilleté dont l'intercalaire ait un amortissement à la flexion $\nu = \Delta f/f_c$ supérieur à 0,15, la mesure étant effectuée en excitant par un choc un barreau de 9 cm de longueur et 3 cm de largeur fait d'un verre feuilleté où la résine est entre deux verres épais chacun de 4 mm, et en mesurant la fréquence de résonance du premier mode $f_c$ et la largeur du pic $\Delta f$ à une amplitude $A/\sqrt{2}$ où $A$ est l'amplitude maximum à la fréquence $f_c$ de telle sorte que son indice d'affaiblissement acoustique ne se différencie pour aucune des fréquences supérieures à 800 hertz de moins de 6 décibels d'un indice de référence augmentant de 9 dB par octave jusqu'à 2000 Hz et de 3 dB par octave aux fréquences supérieures. De plus, l'écart-type des différences de son indice d'affaiblissement acoustique par rapport à l'indice de référence reste inférieur à 4 dB. Les épaisseurs des deux verres pourront être identiques. Selon une variante, cette épaisseur commune sera de 2,2 mm.

Le critère caractérisant la résine retenue dans le brevet EP-B-0 387 148 est différent de celui du brevet EP-B-0 100 701 puisqu'il s'agit de la largeur du « pic » de la fréquence critique d'un barreau feuilleté, grandeur qui varie avec l'amortissement de la résine constituant l'intercalaire du vitrage feuilleté, alors que dans le brevet EP-B-0 100 701, c'était la fréquence critique proprement dite qui était la grandeur caractéristique, variant, elle avec la raideur de la résine.

Il est par ailleurs connu, pour améliorer les performances acoustiques des vitrages isolants thermiques, c'est-à-dire des vitrages multiples, d'associer des verres unitaires d'épaisseurs différentes, éventuellement sous forme de vitrages feuilletés, le film intercalaire ayant des performances acoustiques améliorées. Ces dernières solutions qui améliorent incontestablement de manière plus ou moins importante les performances acoustiques ont l'inconvénient d'accroître très sensiblement l'épaisseur des vitrages et donc d'obliger à utiliser des fenêtres spéciales renforcées mécaniquement.

En effet, les différents types de vitrages multiples de protection acoustique connus présentent des épaisseurs totales importantes ce qui pose des problèmes de poids et de volume par rapport aux fenêtres dans lesquels ils sont intégrés. En particulier, lorsque de tels vitrages sont réalisés avec des panneaux de verre simple, ces panneaux ont généralement des épaisseurs supérieures à 8 mm et des panneaux de verre feuilleté usuellement employés sont généralement constitué de feuilles de verre d'épaisseur minimum de 4 mm. Ainsi on obtient des vitrages multiples très encombrants et présentant un poids supérieur à la moyenne.

L'invention a pour but des vitrages multiples qui réalisent une bonne protection acoustique sans que leurs épaisseurs soient trop augmentées et qui permettent de conserver la profondeur de feuillure habituelle.

Le vitrage multiple, selon l'invention, destiné à assurer la protection thermique et acoustique est monté dans une fenêtre et est constitué d'un premier panneau de verre feuilleté et d'au moins un second panneau de verre simple parallèle au premier panneau et séparé de celui-ci par une lame de gaz, les panneaux étant assemblés entre eux et les feuilles de verre du panneau feuilleté étant réunies par au moins un film plastique donnant des propriétés de protection acoustique, ce vitrage multiple étant caractérisé en ce que le panneau de verre feuilleté comprend au moins deux feuilles de verre d'épaisseur comprise entre 1 et 3,2 mm, en ce que les panneaux de verre simple ont une épaisseur comprise entre 2,8 et 8,2 mm telle qu'elle est égale ou supérieure à l'épaisseur en verre du panneau feuilleté, c'est-à-dire à la somme des épaisseurs des feuilles de verre constituant le panneau feuilleté.

La technique de l'invention permet d'obtenir un vitrage de protection acoustique monté dans une fenêtre comportant un panneau de verre feuilleté et au moins un panneau de verre simple, dont l'épaisseur totale est relativement faible par rapport aux vitrages multiples usuellement employés. De manière surprenante, les inventeurs ont su mettre en évidence qu'un vitrage multiple monté dans une fenêtre dont l'épaisseur des panneaux de verre simple est égale ou supérieure à l'épaisseur en verre du panneau de verre feuilleté, permettent de mettre en oeuvre un vitrage de faible épaisseur dont les résultats acoustiques correspondent à ceux des vitrages acoustiques habituels de plus grande épaisseur.

Selon une variante de l'invention, il est prévu que les lames de gaz aient une épaisseur comprise entre 6 et 20 mm, et de préférence de 12 mm. Le choix d'une lame de gaz d'épaisseur de 12 mm permet d'obtenir un vitrage multiple de protection thermique optimale. Ainsi le vitrage de cette dernière variante réalise une bonne protection acoustique et thermique.

Selon une variante préférée, le film plastique donnant des propriétés de faible raideur est fait d'une résine telle qu'un barreau de 9 cm de longueur et de 3 cm de largeur, constitué d'un verre feuilleté comprenant deux feuilles de verre de 4 mm d'épaisseur réunies par une couche de 2 mm de cette résine, ait une fréquence de résonance du premier mode, $f_c$, qui diffère au plus de 35 % de celle d'un barreau de verre monolithique ayant la même longueur, la même largeur et 4 mm d'épaisseur, et selon une deuxième variante préférée, le film donnant des propriétés d'amortissement est fait d'une résine telle que, lorsque, dans une épaisseur inférieure ou égale à 1 mm, il est associé dans un ensemble feuilleté avec deux verres de 2,1 mm pour constituer une plaque feuilletée dont on mesure l'indice d'affaiblissement acoustique, celui-ci s'écarte, pour les fréquences supérieures à 800 Hz de moins de 6 dB d'un indice de référence augmentant de 9 dB par octave jusqu'à 2000 Hz et de 3 dB par octave aux fréquences supérieures.

La première variante s'applique de préférence aux vitrages bâtiment, notamment pour une bonne protection contre les bruits routiers et la deuxième, aux véhicules, plus particulièrement lorsqu'il s'agit de se protéger des bruits aérodynamiques.

De préférence, selon l'invention, l'épaisseur du film acoustique est égale ou supérieure à 0,38 mm.

Dans une variante de l'invention, le film plastique donnant des propriétés de fort amortissement et/ou de faible raideur est associé à au moins un film de performances acoustiques qui peuvent être banales. Ainsi, il est permis de substituer à une partie de l'épaisseur d'un film acoustique cher, un film banal et bon marché sans dégradation des propriétés acoustiques mais avec, par exemple, une sensible amélioration des propriétés de tenue mécanique et également avec toute la gamme des propriétés additionnelles que peut procurer un tel film : couleurs, anti-UV, diffusion de la lumière, etc...

Les vitrages selon l'invention présentent l'avantage inattendu qu'une bonne isolation acoustique et thermique est obtenue pour un vitrage multiple comprenant des panneaux de faibles épaisseurs par rapports aux panneaux usuels employés dans des vitrages multiples.

D'une manière générale, les vitrages selon l'invention sont de dimensions inférieures à 2 m$^2$ et de préférence inférieures à 1,5 m$^2$.

Les figures et la description qui suivent permettent de comprendre le fonctionnement de l'invention et ses avantages.

Parmi les figures :

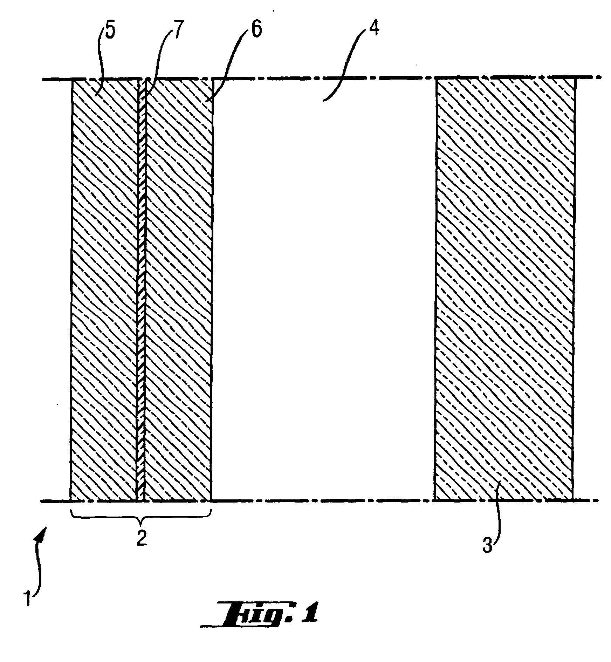

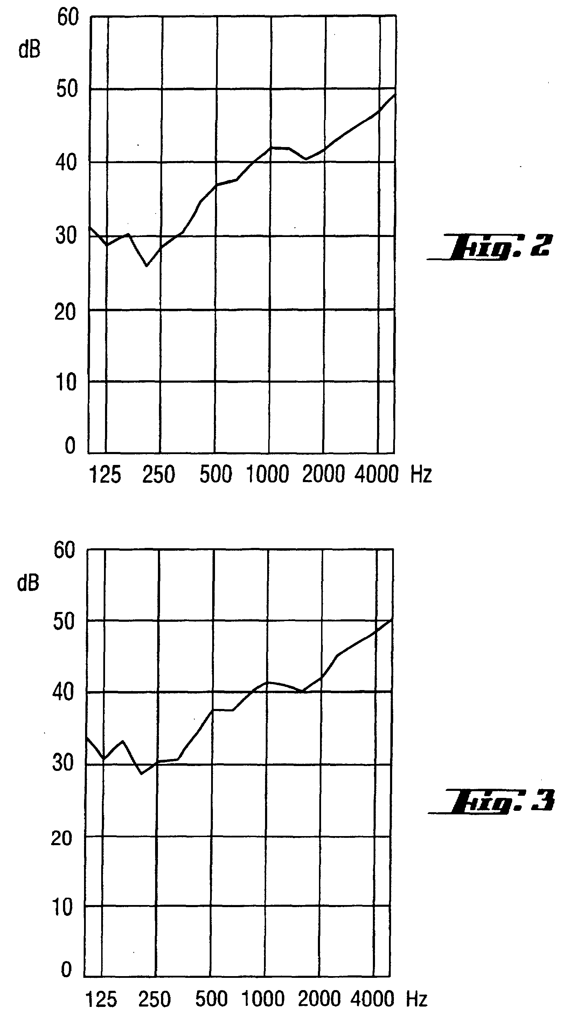

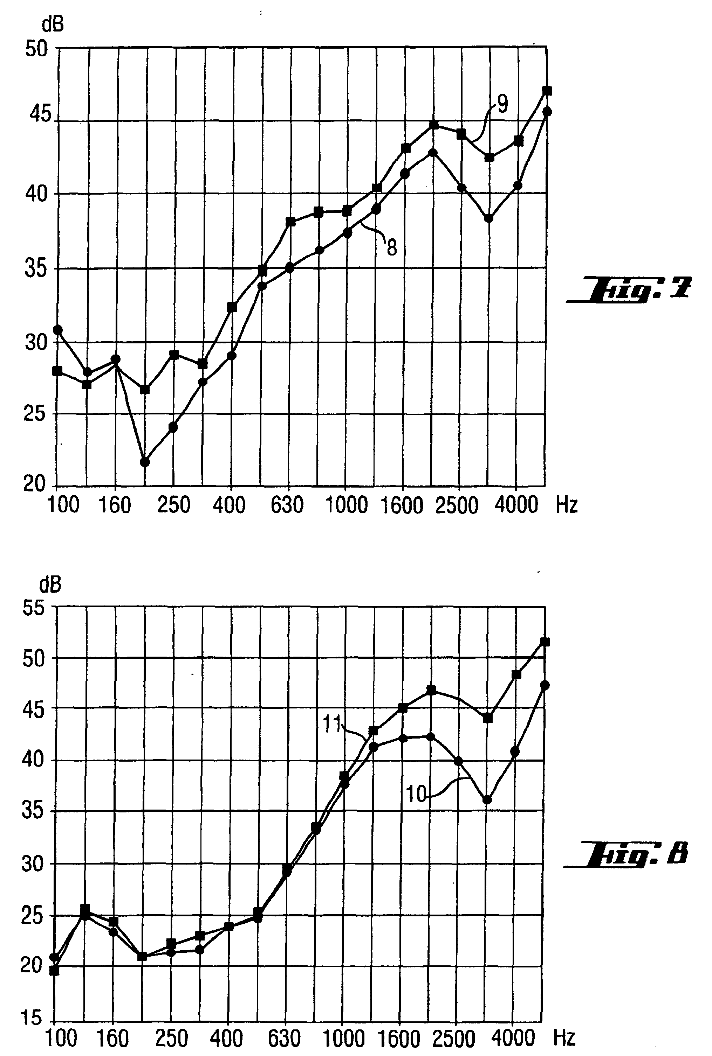

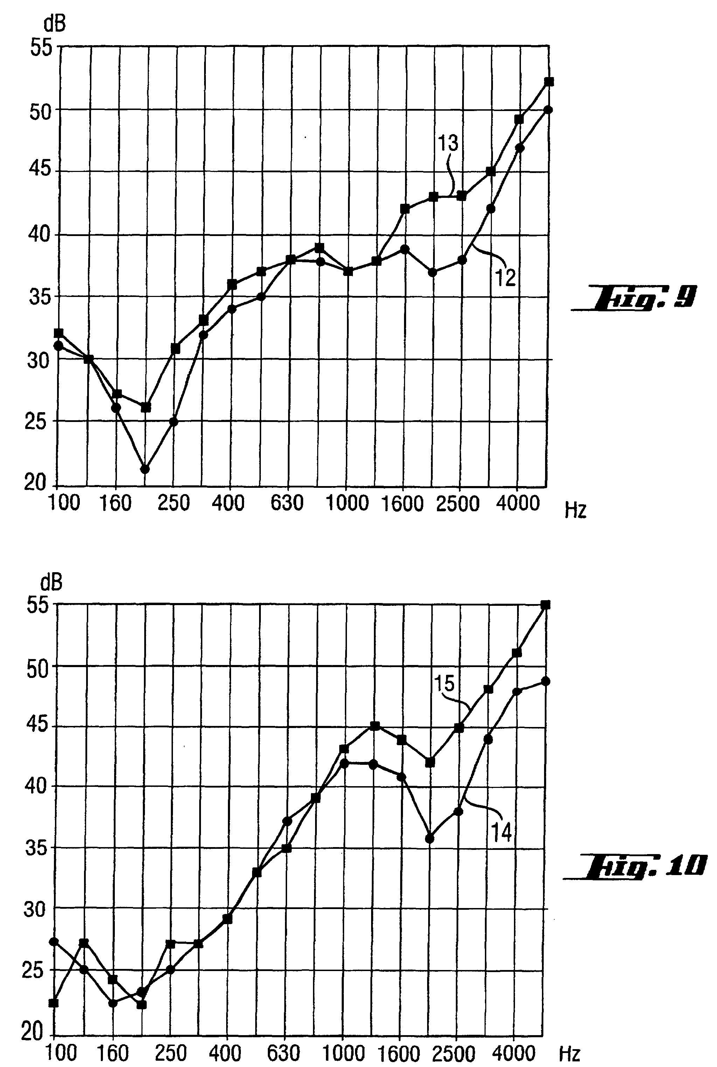

. La figure 1 représente un vitrage multiple selon l'invention.
. La figure 2 et 3 représentent les résultats des mesures d'indice d'affaiblissement acoustique sur des vitrages selon l'invention.
. Les figures 4, 5 et 6 illustrent la méthode utilisée pour mesurer l'amortissement et pour apprécier la raideur des résines acoustiques.
. La figure 7 et 8 représentent les résultats des mesures d'indice d'affaiblissement acoustique sur des vitrages selon l'invention pour un film standard et pour un film acoustique.

Les résines acoustiques efficaces comme intercalaires de vitrages feuilletés sont connues pour agir soit sur l'amortissement, soit sur la raideur des vitrages qu'elles équipent.

Pour les acousticiens, les phénomènes vibratoires dans des plaques feuilletées sont régis par des lois tout-à-fait analogues à celles régissant l'association mécanique entre deux masses réunies par un ressort et un amortisseur montés en parallèle. De même que les équations des mouvements de l'ensemble masse-ressort-masse permettent d'accéder aux grandeurs mécaniques caractéristiques du ressort (sa raideur) et de l'amortisseur (l'amortissement), l'analyse du comportement mécanique d'un barreau constitué par l'association de deux verres, par exemple de 4 mm assemblés, notamment par 2 mm de la résine concernée permet d'accéder aux grandeurs v, l'amortissement et à la raideur K de la résine testée qui permettent aux spécialistes de prévoir l'efficacité acoustique de vitrages feuilletés faits avec la résine en question.

On va maintenant décrire, en référence à la figure 4, la première méthode qui permet de faire le choix d'une résine utilisable dans le cadre de l'invention.

On sait que l'énergie acquise par un objet soumis à un choc engendre un phénomène de vibration et qu'aussitôt après le choc, l'objet redevenu libre vibre suivant son mode propre. A chaque mode est associée une fréquence de vibration. L'amplitude de la vibration dépend de l'excitation initiale, c'est-à-dire de la composante spectrale du choc, la déformation modale étant plus ou moins importante selon que le choc se produit à un ventre ou à noeud de vibration.

Pour qu'un mode propre soit excité, il faut :

(1) que la déformation provoquée au point d'impact ne se situe pas sur un noeud de vibration du mode,
(2) que le spectre d'énergie de choc ait une composante à la fréquence de résonance du mode.

Cette dernière condition est pratiquement toujours remplie, car un choc très bref présente un spectre d'énergie pratiquement uniforme.

La première condition est également remplie et, pour un barreau libre à ses extrémités, par exemple, il suffit de taper à l'une des extrémités pour exciter tous les modes.

En réalité, on n'arrive à « mesurer » que les dix premiers modes, au maximum. L'énergie vibratoire acquise par un choc se dissipe au cours du temps et ce d'autant plus rapidement que le matériau est plus amorti.

Pour un matériau donné, les modes se dissipent d'autant plus vite que la fréquence de résonance associée est plus élevée, de sorte qu'au bout d'un certain temps, et pendant une certaine durée, seul le premier mode subsiste.

Le principe de la mesure consiste donc à effectuer l'analyse des fréquences de vibration d'un barreau soumis à un choc et à repérer la position des fréquences de résonance (fréquences pour lesquelles l'amplitude de vibration est nettement plus importante que dans le reste du spectre).

Selon la figure 4, pour effectuer la mesure on utilise successivement des barreaux 20 de 9 cm de longueur et de 3 cm de largeur, d'abord en un verre de 4 mm d'épaisseur, puis en un verre feuilleté 4(2)4 dans lequel des feuilles de verre de 4 mm d'épaisseur sont assemblées par une couche de 2 mm d'épaisseur de la résine à tester.

Le barreau 20 repose sur deux supports de mousse 21, placés sensiblement aux noeuds de vibration du premier mode (mode fondamental) de flexion dynamique du barreau. Celui-ci est excité par un choc exercé en frappant l'une de ses extrémités libres par un petit objet, tel qu'une règle.

La réponse transitoire du barreau à cette excitation est recueillie par un microphone 23, disposé sur un support 24, très près de la surface du barreau 20, au milieu de celui-ci (ventre de pression). Le signal temporel recueilli par le microphone 23 est amplifié par l'amplificateur 25, puis analysé en fréquence par un analyseur de Fourier 26.

On procède en général à une dizaine d'essais pour un même barreau 20, afin de réduire l'influence des bruits extérieurs.

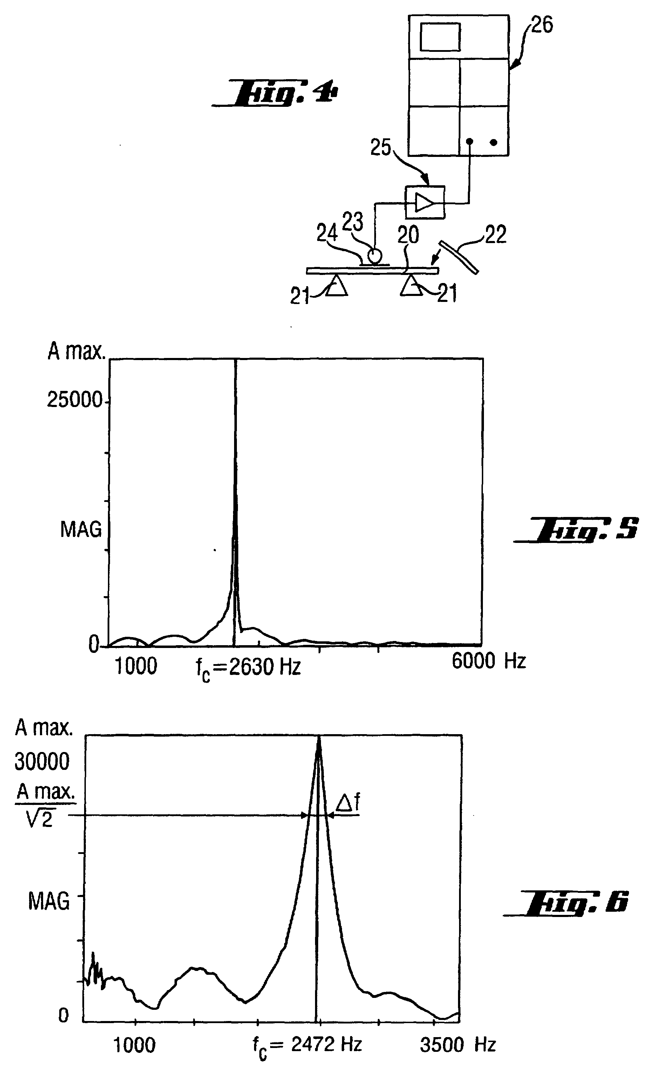

Comme on le voit sur les figures 5 et 6 les courbes obtenues, qui représentent l'amplitude A des vibrations en fonction de la fréquence de celles-ci respectivement pour un barreau de verre monolithique et pour un barreau de verre feuilleté comprenant une résine à tester dans le cadre de la présente invention, permettent de déceler avec précision la fréquence de résonance du mode fondamental de vibration de flexion (fréquence critique). Dans les exemples représentés, la fréquence critique du barreau de verre est de 2630 Hz, tandis que celle du barreau de verre feuilleté est de 2472 Hz.

Pour accéder à la raideur K de la résine testée, on se contente le plus souvent de la valeur de cette fréquence « critique » $f_c$ ou plus exactement de la fréquence de résonance du premier mode du barreau, qui est liée à K.

Du point de vue de la raideur, donc de la fréquence « critique » $f_c$, la limite entre un produit feuilleté banal en acoustique ou, au contraire, efficace se trouve aux environs d'une fréquence « critique » de 3 550 Hz. Les produits faits avec des résines dont $f_c$ est inférieur à cette valeur sont des produits acoustiques performants tandis que les vitrages feuilletés dont la résine a une $f_c$ supérieure à 3550 Hz, c'est-à-dire plus raides, sont médiocres. C'est le cas des feuilletés à base de polyvinylbutyral (PVB). En effet, à la température de 20°C, cette fréquence « critique » est de 4 500 Hz.

Le test qui vient d'être décrit et qui est d'une grande simplicité de mise en oeuvre permet également de déterminer l'amortissement à la flexion v du barreau 20, que l'on définit comme le rapport $\Delta f/f_c$ où $\Delta f$ représente la différence des fréquences correspondant à une amplitude égale à celle de la fréquence « critique » $f_c$ divisée par $\sqrt{2}$. C'est l'amortissement v qui permet de sélectionner les résines efficaces selon le brevet EP-B-0 387 148, celles-ci permettent d'obtenir des vitrages feuilletés performants pour affaiblir les bruits d'origine aérodynamique dans les véhicules. C'est ce critère, celui d'un verre feuilleté efficace contre les bruits aérodynamiques qui est retenu ici. Le test consiste à réaliser un vitrage feuilleté avec deux verres de 2,1 mm et à les associer avec au plus 1 mm de la résine à tester et enfin de mesurer l'indice d'affaiblissement acoustique du vitrage selon la norme ISO 140. On compare alors chaque valeur obtenue pour les fréquences supérieures à 800 Hz à celle d'un indice de référence augmentant de 9 dB par octave jusqu'à 2 000 Hz et de 3 dB par octave aux fréquences supérieures. Pour faire cette comparaison, pour chacune des fréquences concernées, on fait la différence des deux valeurs d'indice. Parmi tous ces écarts, on choisit le plus grand et le plus petit et on en fait la différence. La moitié de celle-ci constitue « l'écart » entre les deux courbes. Si cet écart est inférieur à 6 dB, le feuilleté concerné et donc la résine qui le constitue, ont une grande efficacité acoustique contre les bruits aérodynamiques d'un véhicule en déplacement. En revanche, lorsque cet écart est supérieur à 6 dB la résine est considérée comme acoustiquement médiocre.

Selon les applications, c'est-à-dire, en fait selon la nature des bruits dont on veut se protéger, bruits d'origine aérodynamique dans un véhicule, bruits de route, bruits de voix entre pièces voisines, etc... ,la condition à respecter par une résine acoustique efficace dans un vitrage feuilleté se définit par une « fourchette » à l'intérieur de laquelle doit se trouver, soit sa fréquence « critique » $f_c$, soit l'écart entre les courbes qu'on vient de définir, soit l'une et l'autre de ces grandeurs.

C'est ainsi qu'une famille de résines d'acétal de polyvinyle décrite dans la publication « *Effect of molecular structure of the interlayer on the transmission loss of laminated glass* » présentée à « Inter-noise 94 » (Yokohama, Japon, 29-31 août 1994) possède plusieurs polymères qui permettent de respecter à la fois l'un et l'autre des critères précédents.

Le vitrage multiple 1 représenté sur la figure 1, comprend un panneau 2 de verre feuilleté et un panneau 3 de verre simple, séparés par une lame de gaz 4 et assemblées par tous moyens connus de l'homme du métier, et notamment de façon étanche.

Le panneau feuilleté 2 est du type 22.1, c'est-à-dire qu'il comprend une feuille de verre 5 de 2 mm d'épaisseur, une feuille de verre 6 de 2 mm d'épaisseur et une épaisseur de film plastique 7 classiquement disponible sous l'épaisseur de 0,38 mm, ce film plastique ayant été choisi selon les critères d'amortissement énoncés précédemment. Dans la description qui suit nous nommerons les panneaux feuilletés de cette manière.

Le panneau de verre simple 3 a une épaisseur de 4 mm et la lame de gaz 4 une épaisseur de 12 mm. Le vitrage est donc du type 22.1 (12) 4. Dans la description qui suit, les vitrages seront référencés de cette manière.

Le vitrage 1 testé suivant la norme ISO 140 présente un indice d'affaiblissement acoustique de 35 dB (A) pour un bruit de trafic routier.

Sur le tableau I, on trouve les indices d'affaiblissement acoustique pour différents types de vitrages. Ce sont dans l'ordre :

| n° 0 | vitrage isolant | 4 (12) 4 |
|------|-----------------|----------|
| n° 1 | vitrage multiple | 22.1 (12) 4 |
| n° 2 | vitrage isolant | 10 (12) 4 |
| n° 3 | vitrage multiple | 33.1 (12) 4 |
| n° 4 | vitrage isolant | 6 (12) 4 |
| n° 5 | vitrage isolant | 6 (12) 6 |
| n° 6 | vitrage multiple | 33.1 (12) 6 |
| n° 7 | vitrage multiple | 24.1 (12) 6 |

(Ces épaisseurs sont données à titre d'exemple, elles pourraient être sensiblement modifiées sans qu'on sorte du cadre de l'invention).

Les vitrages n° 1, n° 6 et n° 7 sont des vitrages conformes à l'invention.

Les vitrages comprenant un panneau de verre feuilleté ont tous le même film intercalaire qui répond aux critères d'amortissement énoncés précédemment.

TABLEAU I

| échantillons | 0 | 1 | 2 | 3 | 4 | 5 | 6 | 7 |
|--------------|---|---|---|---|---|---|---|---|
| indice d'affaiblissement acoustique dB (A) route | 31 | 35 | 35 | 34 | 32 | 31 | 35 | 36 |

Les mesures de ces indices d'affaiblissement acoustique ont été réalisées selon la norme ISO 140 dans une installation conforme à ladite norme sur des échantillons de dimensions 1,27 x 0,58 m$^2$ inclus dans une menuiserie de dimensions 1,48 x 1,47 m$^2$.

Les échantillons n° 0 et n° 1 présentent tous deux la même épaisseur et la même isolation thermique, les résultats montrent une différence de 4 dB (A) pour l'indice d'affaiblissement acoustique entre ces deux vitrages.

Le vitrage selon l'invention n° 1 présente donc une meilleure protection acoustique que les doubles vitrages employés usuellement et cela pour une même épaisseur de verre, c'est-à-dire avec un poids voisin et sensiblement la même épaisseur.

L'échantillon n° 2 permet de mettre en avant la faible épaisseur du vitrage selon l'invention. En effet les échantillons n° 1 et n° 2 présentent le même indice d'affaiblissement acoustique et la même isolation thermique, ainsi à indice d'affaiblissement égal, l'épaisseur du double vitrage usuel est largement supérieure à celle du vitrage selon l'invention, la différence étant de 5,62 mm.

L'échantillon n° 3 est un vitrage multiple comprenant un panneau de verre feuilleté, mais l'épaisseur du panneau de verre simple est inférieur à l'épaisseur en verre du panneau de verre feuilleté. Malgré son épaisseur plus élevée, ce vitrage n° 3 est acoustiquement moins performant que le vitrage n° 1 selon l'invention.

Les échantillons n° 6 et n° 7 correspondent au vitrage selon l'invention, l'épaisseur du panneau de verre simple est égale à l'épaisseur en verre du panneau de verre feuilleté. Les résultats montrent, pour une épaisseur totale du vitrage identique, que l'on obtient une meilleure protection acoustique avec des vitrages selon l'invention qu'avec des vitrages hors invention, l'indice d'affaiblissement acoustique étant supérieur de 2 dB (A) quand on compare avec l'échantillon n° 3.

On remarque aussi que les épaisseurs des feuilles de verre du panneau de verre feuilleté ne sont pas nécessairement identiques, l'essentiel réside en ce que l'épaisseur du panneau de verre simple soit supérieure ou égale à l'épaisseur en verre du panneau de verre feuilleté. Les échantillons n° 6 et n° 7 illustrent cette caractéristique. En effet un panneau de verre feuilleté du type 33.1 et un autre du type 24.1 intégré dans le vitrage selon l'invention, donnent le même indice d'affaiblissement acoustique.

Les résultats des échantillons n° 4 et n° 5 permettent d'avoir un élément de comparaison relatif aux doubles vitrages usuellement employés et cela pour une même épaisseur totale du vitrage.

Sur la figure 2, figurent les résultats des indices d'affaiblissement acoustique effectués sur un vitrage du type 33.2 (8) 6 conforme à l'invention comprenant un film acoustique choisi selon les critères d'amortissement énoncés précédemment et inclus dans une fenêtre de type PVC avec ouvrants à la française. Il ressort des mesures les valeurs globales suivantes :

- Selon la norme NF :

$$\text{indice d'affaiblissement acoustique pour un bruit rose } R_{rose} = 39 \text{ dB(A)}$$

$$\text{indice d'affaiblissement acoustique pour un bruit de route } R_{route} = 35 \text{ dB(A)}$$

- Selon la norme ISO 717 :

$$\text{indice d'affaiblissement pondéré } R_W = 39 \text{ dB.}$$

Sur la figure 3 figurent les résultats des indices d'affaiblissement acoustique effectués sur un vitrage du type 33.2 (8) 8 conforme à l'invention comprenant un film acoustique choisi selon les critères d'amortissement énoncés précédemment et inclus dans une fenêtre de type PVC avec ouvrants à la française. Il ressort des mesures les valeurs globales suivantes :

- Selon la norme NF :

$$\text{indice d'affaiblissement acoustique pour un bruit rose } R_{rose} = 40 \text{ dB(A)}$$

$$\text{indice d'affaiblissement acoustique pour un bruit de route } R_{route} = 36 \text{ dB(A)}$$

- Selon la norme ISO 717 :

$$\text{indice d'affaiblissement pondéré } R_w = 39 \text{ dB.}$$

Ces résultats de mesures acoustiques permettent de voir la qualité de protection acoustique du vitrage selon l'invention. On remarque que la protection acoustique est meilleure quand on augmente l'épaisseur du panneau de verre simple. De même, il a été constaté que l'épaisseur de la lame de gaz modifie les résultats des mesures d'indice d'affaiblissement acoustique.

Les figures 7, 8, 9 et 10 illustrent les résultats des mesures d'indice d'affaiblissement acoustique pour un film standard en PVB (courbes 8, 10, 12 et 14 avec des cercles) et pour un film acoustique ayant été choisi selon les critères d'amortissement énoncés précédemment (courbes 9, 11, 13 et 15 avec des carrés), les figures 7 et 9 illustrant les résultats pour des vitrages selon l'invention et les figures 8 et 10 pour les mêmes vitrages mais non montés dans une fenêtre.

Le tableau II présente les indices d'affaiblissement acoustique pour différentes fréquences d'un vitrage du type 22.1 (12) 4 inclus dans une fenêtre de type PVC de dimensions 1,48 x 1,47 m$^2$ avec ouvrants à la française, les vitrages ayant une dimension de 1,27 x 0,58 m$^2$. La figure 7 représente les courbes correspondantes aux résultats des mesures acoustiques du tableau II.

TABLEAU II

| FREQENCE | FILM STANDARD | FILM ACOUSTIQUE |
|---|---|---|
| 100 | 30,9 | 28,1 |
| 125 | 27,9 | 27 |
| 160 | 28,7 | 28,5 |
| 200 | 21,6 | 26,6 |
| 250 | 24,1 | 29,2 |
| 315 | 27,3 | 28,5 |
| 400 | 29,1 | 32,5 |
| 500 | 34 | 34, 9 |
| 630 | 35,1 | 38,3 |
| 800 | 36,4 | 39 |
| 1000 | 37,6 | 39 |
| 1250 | 39,2 | 40,4 |
| 1600 | 41,6 | 43,3 |
| 2000 | 43,1 | 44,8 |
| 2500 | 40,4 | 44,3 |
| 3150 | 38,4 | 42,6 |
| 4000 | 40,6 | 43,8 |
| 5000 | 45,6 | 47 |
| $R_{ROUTE}$ dB(A) | 31,5 | 34,5 |
| $R_{ROSE}$ dB(A) | 35,5 | 38,3 |
| $R_W$dB | 36 | 39 |

Le tableau III présente les indices d'affaiblissement acoustique pour différentes fréquences d'un vitrage du type 22.1 (12) 4 seul; c'est-à-dire non inclus dans une fenêtre, de dimensions 1,48 x 1,23 m$^2$. La figure 8 représente les courbes correspondantes aux résultats des mesures acoustiques du tableau III.

TABLEAU III

| FREQUENCE | FILM STANDARD | FILM ACOUSTIQUE |
|---|---|---|
| 100 | 20,9 | 19,5 |
| 125 | 25,3 | 25,5 |
| 160 | 23,6 | 24,6 |
| 200 | 21,1 | 21,1 |
| 250 | 21,6 | 22,4 |
| 315 | 21,9 | 23,1 |
| 400 | 24,2 | 24,2 |
| 500 | 25,2 | 25,4 |
| 630 | 29,4 | 29,7 |

TABLEAU III   (suite)

| FREQUENCE | FILM STANDARD | FILM ACOUSTIQUE |
|---|---|---|
| 800 | 33,4 | 33,8 |
| 1000 | 38 | 38,7 |
| 1250 | 41,7 | 43,2 |
| 1600 | 42,7 | 44,8 |
| 2000 | 42,8 | 46,7 |
| 2500 | 40,1 | 46 |
| 3150 | 35,9 | 43,9 |
| 4000 | 40,6 | 48,8 |
| 5000 | 47,8 | 51,5 |
| $R_{ROSE}$ dB(A) | 28 | 28,5 |
| $R_{ROUTE}$ dB(A) | 32 | 33 |
| $R_W$ dB | 32 | 32 |

Le tableau IV présente les indices d'affaiblissement acoustique pour différentes fréquences d'un vitrage du type 33.1 (12) 6 inclus dans une fenêtre de dimensions 1,48 x 1,47 m$^2$ avec ouvrants à la française, les vitrages ayant une dimension de 1,27 x 0,58 m$^2$. La figure 9 représente les courbes correspondantes aux résultats des mesures acoustiques du tableau IV.

TABLEAU IV

| FREQUENCE | FILM STANDARD | FILM ACOUSTIQUE |
|---|---|---|
| 100 | 31 | 32 |
| 125 | 30 | 30 |
| 160 | 26 | 27 |
| 200 | 21 | 26 |
| 250 | 25 | 31 |
| 315 | 32 | 33 |
| 400 | 34 | 36 |
| 500 | 35 | 37 |
| 630 | 38 | 38 |
| 800 | 38 | 39 |
| 1000 | 37 | 37 |
| 1250 | 38 | 38 |
| 1600 | 39 | 42 |
| 2000 | 37 | 43 |
| 2500 | 38 | 43 |
| 3150 | 42 | 45 |
| 4000 | 47 | 49 |
| 5000 | 50 | 52 |
| $R_{ROUTE}$ dB(A) | 32 | 35 |
| $R_{ROSE}$ dB(A) | 36 | 39 |
| $R_W$ dB | 37 | 39 |

Le tableau V présente les indices d'affaiblissement acoustique pour différentes fréquences d'un vitrage du type 33.1 (12) 6 seul, c'est-à-dire non inclus dans une fenêtre de dimensions 1,48 x 1,23 m$^2$. La figure 10 représente les courbes correspondantes aux résultats des mesures acoustiques du tableau V.

TABLEAU V

| FREQUENCE | FILM STANDARD | FILM ACOUSTIQUE |
|---|---|---|
| 100 | 27 | 22 |

TABLEAU V   (suite)

| FREQUENCE | FILM STANDARD | FILM ACOUSTIQUE |
|---|---|---|
| 125 | 25 | 27 |
| 160 | 22 | 24 |
| 200 | 23 | 22 |
| 250 | 25 | 27 |
| 315 | 27 | 27 |
| 400 | 29 | 29 |
| 500 | 33 | 33 |
| 630 | 37 | 35 |
| 800 | 39 | 39 |
| 1000 | 42 | 43 |
| 1250 | 42 | 45 |
| 1600 | 41 | 44 |
| 2000 | 36 | 42 |
| 2500 | 38 | 45 |
| 3150 | 44 | 48 |
| 4000 | 48 | 51 |
| 5000 | 49 | 55 |
| $R_{ROUTE}$dB(A) | 31 | 32 |
| $R_{ROSE}$dB(A) | 36 | 36 |
| $R_W$dB | 37 | 37 |

Les résultats des mesures acoustiques tout comme les courbes des figures 7, 8, 9 et 10 d'indices d'affaiblissement acoustique qui ont servi à les obtenir, permettent de voir l'efficacité de la solution de l'invention.

Pour les deux types de vitrages, il apparaît de manière incontestable que les meilleurs résultats en matière de protection acoustique sont obtenus avec le panneau feuilleté comprenant un film plastique donnant des propriétés de protection acoustique et le vitrage monté dans une fenêtre. En effet, on remarque, de manière surprenante, que les valeurs globales d'indice d'affaiblissement acoustique, telles que $R_{ROUTE}$ et $R_W$, entre le vitrage dont le film plastique est un film standard et le vitrage dont le film plastique est un film acoustique se différencie de 2 ou 3 dB, voir 4 dB pour les vitrages montés dans une fenêtre alors que la différence pour les vitrages seuls est beaucoup plus minime, voir nulle.

Grâce au vitrage selon l'invention, on obtient ainsi de bons résultats acoustiques pour des épaisseurs totales du vitrage sensiblement inférieures à l'épaisseur des vitrages usuellement employés, l'indice d'affaiblissement acoustique pour un bruit de route $R_{ROUTE}$ étant supérieur ou égal à 34,5 dB(A) et l'indice d'affaiblissement pondéré $R_W$ étant supérieur ou égal à 39 dB, pour les deux types de vitrages selon l'invention.

Par ailleurs, il est possible d'associer au film plastique acoustique un ou plusieurs films standards. Ainsi, on a dans le même vitrage une protection acoustique associée à toutes les performances qu'un film autre permet d'obtenir : anti-effraction, anti-UV, couleurs variées, effet diffusant, etc.. et cela sans augmentation importante de l'épaisseur du vitrage. Ces films traditionnels, industrialisés depuis de longues années, le PVB en particulier , ont des performances d'adhérence, de tenue en température, de résistance mécanique en cas de choc, etc... optimisées qui les rendent aptes à tous les usages.

Les avantages présentés par les vitrages selon l'invention sont manifestes : il est intéressant d'obtenir un résultat acoustique donné avec le verre le plus mince possible : économie de matière donc de poids ce qui permet d'alléger la structure porteuse et surtout d'utiliser des châssis porteurs de vitrages identiques pour des variantes normales et les variantes acoustiques. De plus, il est possible d'obtenir un vitrage avec de bonnes propriétés acoustiques et une tenue mécanique correcte, notamment en tant que vitrage de sécurité et avec une épaisseur de résine acoustique aussi réduite que possible.

Les différents essais ont été effectués pour des vitrages comprenant un panneau de verre feuilleté et un panneau de verre simple, mais l'invention ne se limite pas à ce type de vitrage. Un vitrage comprenant un panneau de verre feuilleté et deux panneaux de verre simple, par exemple, ne sort pas du cadre de l'invention si les épaisseurs des panneaux de verres simples sont égales ou supérieures à l'épaisseur en verre du panneau de verre feuilleté.

De même, les différents essais ont été réalisés avec un film plastique choisi selon les critères d'amortissement énoncés dans la description, mais un film plastique choisi selon les critères de raideur énoncés dans la description est aussi envisageable sans toutefois sortir du cadre de l'invention.

**Revendications**

1. Vitrage multiple de protection acoustique monté dans une fenêtre comprenant un premier panneau de verre feuilleté et au moins un second panneau de verre simple, parallèle au premier panneau et séparé de celui-ci par une lame de gaz, les panneaux étant assemblés entre eux de façon étanche et les feuilles de verre du panneau feuilleté étant réunies par au moins un film plastique donnant des propriétés de protection acoustique, **caractérisé en ce que** le panneau de verre feuilleté comprend au moins deux feuilles de verre, chacune d'épaisseur comprise entre 1 et 3,2 mm, **et en ce que** le panneau de verre simple a une épaisseur comprise entre 2,8 et 8 mm, telle qu'elle est égale ou supérieure à la somme des épaisseurs des feuilles de verre du panneau feuilleté.

2. Vitrage multiple selon la revendication 1, **caractérisé en ce que** les lames de gaz ont une épaisseur comprise entre 6 et 20 mm, et de préférence de 12 mm.

3. Vitrage multiple selon la revendication 1 ou 2, **caractérisé en ce que** le film plastique donnant des propriétés de protection acoustique est fait d'une résine telle qu'un barreau de 9 cm de longueur et de 3 cm de largeur, constitué d'un verre feuilleté comprenant deux feuilles de verre de 4 mm d'épaisseur réunies par une couche de 2 mm de cette résine, ait une fréquence de résonance du premier mode, $f_c$, qui diffère au plus de 35 % de celle d'un barreau de verre monolithique ayant la même longueur, la même largeur et 4 mm d'épaisseur.

4. Vitrage multiple selon l'une des revendications 1 à 3, **caractérisé en ce que** le film plastique donnant des propriétés de protection acoustique est fait d'une résine telle que, lorsque dans une épaisseur inférieure ou égale à 1 mm, il est associé dans un ensemble feuilleté avec deux verres de 2,1 mm pour constituer une plaque feuilletée dont on mesure l'indice d'affaiblissement acoustique, celui-ci s'écarte, pour les fréquences supérieures à 800 Hz, de moins de 6 dB d'un indice de référence augmentant de 9 dB par octave jusqu'à 2000 Hz et de 3 dB par octave aux fréquences supérieures.

5. Vitrage multiple selon l'une des revendications 1 à 4, **caractérisé en ce que** ledit film plastique donnant les propriétés de protection acoustique a une épaisseur égale ou supérieure à 0,38.

6. Vitrage multiple selon l'une des revendications 1 à 5, **caractérisé en ce que** ledit film plastique est associé à au moins un film autre apportant notamment d'autres propriétés.

7. Utilisation du vitrage multiple selon la revendication 3 pour équiper des bâtiments.

8. Utilisation du vitrage multiple selon la revendication 4 pour des véhicules, en particulier utilisation pour des vitrages d'automobiles.

**Patentansprüche**

1. Mehrscheiben-Isolierglas für den Schallschutz, das in ein Fenster eingebaut wird und eine erste Scheibe aus Verbundglas und mindestens eine zweite Scheibe aus einfachem Glas umfasst, die parallel zu ersten und von dieser durch eine Gasfüllung getrennt ist, wobei die Scheiben dicht miteinander assembliert sind und die Glasscheiben der Verbundglasscheibe durch mindestens eine Kunststofffolie miteinander verbunden sind, die schalldämmende Eigenschaften verleiht, **dadurch gekennzeichnet, dass** die Verbundglasscheibe mindestens zwei Glasscheiben mit einer Dicke von jeweils 1 bis 3,2 mm umfasst, **und dass** die Dicke der einfachen Glasscheibe derart 2,8 bis 8 mm beträgt, dass sie gleich oder größer als die Summe der Dicken der Glasscheiben der Verbundglasscheibe ist.

2. Mehrscheiben-Isolierglas nach Anspruch 1, **dadurch gekennzeichnet, dass** die Dicke der Gasfüllungen 6 bis 20 mm und vorzugsweise 12 mm beträgt.

3. Mehrscheiben-Isolierglas nach Anspruch 1 oder 2, **dadurch gekennzeichnet, dass** die schalldämmende Eigenschaften verleihende Kunststoffolie derart aus einem Harz hergestellt ist, dass ein Stab mit einer Länge von 9 cm und einer Breite von 3 cm, der aus einem Verbundglas besteht, das zwei Glasscheiben mit einer Dicke von 4 mm umfasst, die durch eine 2 mm dicke Schicht aus diesem Harz verbunden sind, eine Resonanzfrequenz $f_c$ der ersten Mode besitzt, die sich um höchstens 35 % von derjenige eines Stabes aus monolithischem Glas mit derselben Länge, mit derselben Breite und einer Dicke von 4 mm unterscheidet.

**4.** Mehrscheiben-Isolierglas nach einem dem Ansprüche 1 bis 3, **dadurch gekennzeichnet, dass** die schalldämmende Eigenschaften verleihende Kunststoffolie derart aus einem Harz hergestellt ist, dass, wenn sie in einer Dicke von kleiner oder gleich 1 mm mit zwei Glasscheiben mit einer Dicke von 2,1 mm verbunden wird, um eine Verbundglasscheibe zu bilden, deren Schalldämm-Maß gemessen wird, dieses bei höheren Frequenzen als 800 Hz um weniger als 6 dB von einem Bezugswert abweicht, der um 9 dB pro Oktave bis zu 2000 Hz und um 3 dB pro Oktave bei höheren Frequenzen erhöht wird.

**5.** Mehrscheiben-Isolierglas nach einem der Ansprüche 1 bis 4, **dadurch gekennzeichnet, dass** die Dicke der schalldämmende Eigenschaften verleihenden Kunststofffolie 0,38 mm oder mehr beträgt.

**6.** Mehrscheiben-Isolierglas nach einem der Ansprüche 1 bis 5, **dadurch gekennzeichnet, dass** die Kunststofffolie mit mindestens einer weiteren Folie verbunden ist, die insbesondere andere Eigenschaften verleiht.

**7.** Verwendung des Mehrscheiben-Isolierglases nach Anspruch 3 zum Ausstatten von Gebäuden.

**8.** Verwendung des Mehrscheiben-Isolierglases nach Anspruch 4 in Fahrzeugen und insbesondere Kraftfahrzeugen.

**Claims**

**1.** Multiple acoustic protection glazing mounted in a window comprising a first laminated glass panel and at least one second simple glass panel, parallel to the first panel and separated therefrom by a layer of gas, the panels being assembled together in a sealed fashion and the sheets of glass in the laminated panel being joined by at least one plastic film giving the properties of acoustic protection, **characterised in that** the laminated glass panel comprises at least two sheets of glass each with a thickness of between 1 and 3.2 mm, and **in that** the simple glass panel has a thickness of between 2.8 and 8 mm, such that it is equal to or greater than the sum of the thicknesses of the sheets of glass in the laminated panel.

**2.** Multiple glazing according to Claim 1, **characterised in that** the layers of gas have a thickness of between 6 and 20 mm, and preferably 12 mm.

**3.** Multiple glazing according to Claim 1 or 2, **characterised in that** the plastic film giving the properties of acoustic protection is made from a resin such as a bar 9 cm long and 3 cm wide, consisting of a laminated glass comprising two sheets of glass 4 mm thick joined by a 2 mm layer of this resin, has a resonant frequency of the first mode, $f_c$, which differs by no more than 35% of that of a bar of monolithic glass having the same length, the same width and a thickness of 4 mm.

**4.** Multiple glazing according to one of Claims 1 to 3, **characterised in that** the plastic film giving properties of acoustic protection is made from a resin such that when, in a thickness less than or equal to 1 mm, it is associated in a laminated assembly with two 2.1 mm glasses in order to constitute a laminated plate whose acoustic attenuation index is measured, the latter is different, for frequencies greater than 800 Hz, by less than 6 dB from a reference index increasing by 9 dB per octave up to 2000 Hz and 3 dB per octave at higher frequencies.

**5.** Multiple glazing according to one of Claims 1 to 4, **characterised in that** the said plastic film giving the properties of acoustic protection has a thickness equal to or greater than 0.38.

**6.** Multiple glazing according to one of Claims 1 to 5, **characterised in that** the said plastic film is associated with at least one other film affording in particular other properties.

**7.** Use of the multiple glazing according to Claim 3 for equipping buildings.

**8.** Use of the multiple glazing according to Claim 4 for vehicles, in particular use for automobile glazing.

_Fig. 1_

*Fig: 2*

*Fig: 3*

Fig. 4

Fig. 5

A max.

25000

MAG

0

1000    $f_c = 2630$ Hz    6000 Hz

Fig. 6

A max.
30000

$\dfrac{A\ max.}{\sqrt{2}}$

$\Delta f$

MAG

0

1000    $f_c = 2472$ Hz    3500 Hz

14

_Fig. 7_

_Fig. 8_

*Fig. 9*

*Fig. 10*